(19) Europäisches Patentamt / European Patent Office / Office européen des brevets

(11) **EP 4 048 547 B1**

(12) **FASCICULE DE BREVET EUROPEEN**

(45) Date de publication et mention
de la délivrance du brevet:
**03.04.2024 Bulletin 2024/14**

(21) Numéro de dépôt: **20807077.1**

(22) Date de dépôt: **21.10.2020**

(51) Classification Internationale des Brevets (IPC):
*B61L 27/16* (2022.01)      *F24F 11/64* (2018.01)
*F24F 110/10* (2018.01)      *F24F 140/60* (2018.01)
*G05D 23/19* (2006.01)      *B60M 3/00* (2006.01)
*H02J 3/14* (2006.01)

(52) Classification Coopérative des Brevets (CPC):
**G05D 23/1905; B60M 3/00; B61L 27/16;**
**F24F 11/64; H02J 3/14;** F24F 2110/10;
F24F 2140/60; H02J 2310/40; H02J 2310/60;
Y02B 70/30; Y02B 70/3225; Y04S 20/222;
Y04S 20/244

(86) Numéro de dépôt international:
**PCT/FR2020/051897**

(87) Numéro de publication internationale:
**WO 2021/079061 (29.04.2021 Gazette 2021/17)**

(54) **PROCÉDÉ DE CONFIRMATION D'UNE EXÉCUTION D'UNE COMMANDE DE RÉDUCTION DE CONSOMMATION**

VERFAHREN ZUR BESTÄTIGUNG EINER AUSFÜHRUNG EINES
VERBRAUCHSMINDERUNGSBEFEHLS

METHOD FOR CONFIRMING AN EXECUTION OF A CONSUMPTION REDUCTION COMMAND

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.10.2019 FR 1911940**

(43) Date de publication de la demande:
**31.08.2022 Bulletin 2022/35**

(73) Titulaire: **Faiveley Transport Tours
37700 Saint Pierre des Corps (FR)**

(72) Inventeur: **AUBIN, Philippe
37390 Chanceaux Sur Choisille (FR)**

(74) Mandataire: **Santarelli
Tour Trinity
1 bis Esplanade de la Défense
92035 Paris La Défense Cedex (FR)**

(56) Documents cités:
EP-A1- 3 037 317        FR-A1- 2 839 285
FR-B1- 2 839 285        US-A- 5 346 163
US-A1- 2012 246 495

**Description**

La présente invention concerne un procédé de confirmation d'une exécution d'une commande de réduction de consommation d'un ensemble de véhicules de transport de passagers, tels que des véhicules ferroviaires.

L'invention s'applique en particulier aux flottes de véhicules de transport ferroviaire comme par exemple les trains, les métros, les tramways, les trolleybus, etc., alimentés par un réseau électrique.

De manière idéale, l'énergie électrique produite par les centres de production d'énergie doit être égale à l'énergie électrique consommée par l'ensemble des consommateurs d'électricité. Pour atteindre cet objectif, des prédictions de consommation d'énergie sont réalisées, par exemple quotidiennement, notamment pour les grands consommateurs d'électricité tel que le secteur du transport, la sidérurgie, etc. En fonction des prédictions, la production d'énergie électrique par les centres de production d'énergie ainsi que la gestion des écarts de consommation par rapport à la consommation prévue, sont planifiées par la compagnie gestionnaire du réseau d'électricité.

Lorsque la compagnie gestionnaire du réseau d'électricité, en charge de maintenir l'équilibre entre l'offre d'électricité et la demande en électricité, identifie une ou plusieurs périodes de pointe où la consommation est supérieure à la production d'électricité, ou identifie une situation où la consommation d'électricité est légèrement supérieure à la production d'électricité et entrainerait le démarrage inutile d'une unité de production supplémentaire, elle établit une stratégie d'effacement. Cette stratégie consiste à réduire temporairement, avec un pas de temps de 30 minutes par exemple, la consommation électrique afin de rétablir l'équilibre entre la production et la consommation électrique. Ainsi, en réponse à une commande d'effacement retranscrivant des directives émises par la compagnie gestionnaire, les industriels, gros consommateurs d'électricité, sont invités à réduire leur consommation électrique, en arrêtant par exemple certains de leurs équipements électriques.

Aujourd'hui, le transport de passagers, et en particulier le transport ferroviaire, est un des plus grands consommateurs d'électricité en France.

Dans un véhicule de transport de passagers, tel qu'un véhicule ferroviaire, le système de climatisation est l'équipement le plus consommateur d'énergie électrique après le système de traction du véhicule. L'énergie électrique consommée par la climatisation étant variable en fonction des saisons et des variations climatiques ponctuelles, il est parfois difficile de prévoir la consommation d'énergie électrique pour toute une flotte de véhicules. Lorsque la flotte de véhicules consomme une quantité d'énergie supérieure aux prévisions, la compagnie affrétant la flotte est alors pénalisée par la compagnie gestionnaire du réseau d'électricité, et notamment lorsque la surconsommation est réalisée pendant des périodes critiques, telles des périodes ayant des pics de consommation.

Il existe des systèmes, tel que décrit dans le document FR3011912, permettant de réduire la consommation des systèmes de climatisation d'une flotte de véhicules ferroviaires à distance et en temps réel. Néanmoins, l'une des exigences imposées aux industriels, pour pouvoir être intégrés dans une stratégie d'effacement, est de pouvoir justifier de l'exécution d'une commande d'effacement retranscrivant les directives émises par la société gestionnaire.

Le document EP 3037317 A1 décrit un système de gestion de l'énergie électrique ferroviaire comprenant un système de gestion de service, un système de gestion de station et un système de contrôle. Le système de gestion de service assure la gestion des véhicules ferroviaires. Les véhicules ferroviaires peuvent comprendre un système de régulation de la température à l'intérieur du véhicule, cette régulation pouvant être ajustée selon les besoins

L'invention a pour but de proposer une solution technique permettant de confirmer l'exécution d'une commande de réduction de consommation en réponse à des directives d'effacement émises par une société gestionnaire.
A cet égard, la présente invention vise, selon un premier aspect, un procédé de confirmation d'une exécution d'une commande de réduction de consommation de la puissance électrique d'au moins un véhicule de transport de passagers, chaque véhicule comprenant un système de régulation de température et un capteur de température, le système de régulation étant associé à des moyens de climatisation et étant configuré pour maintenir la température d'un habitacle dudit véhicule à une température de consigne en fonction d'une température mesurée dans l'habitacle par le capteur de température, le procédé comprenant les étapes suivantes:

- envoi d'un signal de commande au système de régulation de chaque véhicule, le signal de commande étant modulé à un signal de référence;
- obtention d'un signal de la puissance consommée par les moyens de climatisation de l'ensemble des véhicules en réponse au signal de référence ; et
- confirmation de l'exécution de la commande de réduction de consommation en fonction des caractéristiques dudit signal de la puissance consommée par les moyens de climatisation de l'ensemble des véhicules.

Ainsi, le procédé permet, en utilisant un signal de commande modulé avec un signal de référence, de confirmer l'exécution de la commande, de la réduction de la puissance consommée par les moyens de climatisation. En effet, lorsqu'il est possible d'isoler, dans le signal de puissance consommée par les moyens de climatisation de l'intégralité des véhicules ferroviaires, une composante présentant une forme similaire au signal de référence, cela constitue la confirmation que la puissance consommée est bien réalisée en réponse au signal de commande modulé par le signal de référence. Par conséquent, lorsque le signal de commande comprend un signal de pilotage de la variation de la puissance électrique, en d'autres termes un signal d'effacement, le procédé permet de confirmer la réception et l'exécution de la commande en vue d'un effacement et de le justifier éventuellement auprès d'une société gestionnaire.

L'étape d'obtention du signal de la puissance consommée par les moyens de climatisation en réponse au signal de référence peut comprendre les étapes suivantes :

- détermination d'un signal d'une puissance électrique totale consommée par l'ensemble des véhicules en réponse au signal de commande ; et
- démodulation du signal de puissance électrique totale consommée par l'ensemble des véhicules.

La démodulation du signal de puissance consommée par l'ensemble des véhicules de puissance en réponse au signal de référence permet d'identifier les composantes de la puissance présentant la même signature prédéterminée que le signal de référence (compris dans le signal de commande envoyé). La démodulation peut par exemple consister à multiplier par le signal de référence la puissance consommée totale par la flotte de véhicules obtenue précédemment.

L'étape d'envoi peut comprendre une étape dans laquelle une valeur du signal de commande à un instant t est ajoutée à la température mesurée au même instant t par le capteur de température.

On notera que, de manière connue, un système de climatisation comporte des moyens de régulation configurés pour maintenir la température d'un habitacle à une température de consigne, que ce soit pour chauffer ou pour refroidir l'habitacle. En général, des capteurs de température mesurent la température de l'habitacle. Cette température mesurée est ensuite comparée à la température de consigne pour activer ou ne pas activer, en fonction du résultat de la comparaison, des actionneurs du système de climatisation, permettant de chauffer ou de refroidir, selon le cas, l'habitacle pour qu'il atteigne la température de consigne. Ici, le capteur de température est leurré, de sorte que, à un instant t, la température mesurée par le capteur de température est incrémentée ou décrémentée par une valeur de température du signal de commande à l'instant t. Bien entendu la valeur du signal peut être positive ou négative, permettant l'incrément ou le décrément de température. Cela permet ainsi de réduire la consommation d'électricité par les moyens de climatisation, par exemple, en incrémentant la température mesurée par le capteur de température lorsque les moyens de climatisation sont configurés pour chauffer, ou en décrémentant la température mesurée par le capteur de température lorsque les moyens de climatisation sont configurés pour refroidir. Les valeurs du signal de commande sont ainsi choisies en conséquence. Le signal de référence, servant à la modulation du signal de commande, est choisi de sorte que son impact sur ce système de leurre du capteur de température soit limité lorsqu'il n'est pas utilisé en combinaison avec un signal d'effacement. En conséquence, l'amplitude du signal est choisie de sorte que l'impact du signal soit sans effet sur le confort des voyageurs.

Le signal de commande modulé peut être la somme d'un signal de pilotage de la variation de la puissance électrique consommée et du signal de référence.

Le signal de pilotage de la variation de la puissance, pouvant également être appelé signal d'effacement, est un signal retranscrivant les directives d'effacement transmises par la société gestionnaire. Avant d'être transmis aux moyens de climatisation, le signal de pilotage de la variation de la puissance est modulé par un signal de référence, par somme, afin d'obtenir un signal de commande pouvant être transmis aux moyens de climatisation. Cette modulation permet notamment, grâce à la signature du signal de référence, être capable d'identifier dans la puissance totale consommée, une composante présentant la même signature.

L'étape d'obtention peut comprendre les étapes suivantes :

- obtention d'un signal intermédiaire en multipliant par le signal de référence, le signal de puissance électrique totale consommée par l'ensemble des véhicules ; et
- filtrage du signal intermédiaire.

Suite à la démodulation de la puissance consommée totale en multipliant par le signal de référence, on obtient la somme d'un signal continu, dont l'amplitude est égale à la puissance consommée par les moyens de climatisation en réponse au signal de référence, et d'un signal de composantes hautes fréquences. Pour limiter le signal obtenu au signal de la puissance consommée en réponse au signal de référence, un filtrage est effectué pour retirer le signal de composantes hautes fréquences. Le filtrage peut par exemple être réalisé par un filtre passe-bas.

La réception du signal de commande peut être confirmée si le signal intermédiaire filtré a une amplitude supérieure à un seuil prédéterminé. Le seuil prédéterminé est choisi supérieur à 0, de sorte à éviter une fausse confirmation avec la détection du bruit du système. De plus, le seuil prédéterminé est choisi de sorte à être cohérent avec la puissance consommée attendue par les moyens de climatisation en prenant en considération le nombre de véhicules dans la flotte recevant la commande, ainsi que l'amplitude du signal de commande.

En sortie du filtre passe bas, seul le signal de la puissance consommée en réponse au signal de référence est obtenu. L'amplitude de ce signal est ainsi la puissance consommée par les moyens de climatisation en réponse au signal de référence. Dans le cas où en sortie du filtre passe bas, le signal obtenu est nul, ou présente une amplitude inférieure à un seuil prédéterminé (symbolisant la limite à partir de laquelle le signal est considéré ou non comme du bruit), cela signifie qu'il n'y a pas de composantes dans le signal de puissance consommée totale qui correspondent à la puissance du signal de référence. En d'autres termes, cela signifie que la commande de réduction de la consommation n'a pas été reçue et/ou exécutée par les moyens de climatisation.

L'étape de détermination peut comprendre les étapes suivantes :

- détermination des signaux de puissances électriques consommées pour des sous-ensembles de véhicules en réponse au signal de commande ; et
- déduction du signal de puissance électrique totale consommée par l'ensemble des véhicules par la somme des signaux de puissances électrique des sous-ensembles.

En effet, dans le cas particulier où les véhicules de transport ferroviaires de la flotte sont organisés par sous-ensembles, la puissance consommée pour les sous-ensembles est calculée. Cela peut permettre, dans un mode de réalisation alternatif, d'obtenir la confirmation de l'exécution d'une commande de réduction de consommation pour chacun des sous-ensembles.

Le signal de référence peut être un signal sinusoïdal ou un quelconque signal avec une signature temporelle pouvant être caractérisée. En d'autres termes, le signal de référence présente une forme avec une évolution temporelle caractérisable. Ce signal sinusoïdal peut avoir une période choisie de sorte que le signal ne puisse être confondu avec des périodes et alternances ressortant de l'utilisation du système, tel que par exemple l'alternance jour/nuit. De préférence, la période peut être de 2504s. De manière avantageuse, la période du signal de référence est choisie de sorte qu'elle ne puisse pas être confondu avec les harmoniques d'alternance jour/nuit, présentant des différences de consommation d'électricité caractéristiques. Le signal est choisi avec une amplitude comprise entre [0°C ; 1°C], de préférence entre [0,2°C ; 0,5°C], et préférentiellement égal à 0, 2°C. L'amplitude est choisie suffisamment faible pour ne pas avoir de conséquence sur le confort des passagers (c'est-à-dire imperceptible par les passagers), de sorte à ne pas faire varier de manière trop importante la température des cabines ou habitacles des véhicules de transport. Néanmoins, l'amplitude doit être suffisamment élevée pour qu'elle soit visible par le système, et que le signal de référence ne puisse pas être confondu avec les bruits du système.

L'invention vise, selon un second aspect, un dispositif de gestion de la consommation d'énergie électrique comprenant des moyens de confirmation d'une exécution d'une commande de réduction de consommation de la puissance électrique configurés pour mettre en oeuvre le procédé tel que précité.

D'autres particularités et avantages de l'invention apparaîtront encore dans la description ci-après.

L'invention, selon un exemple de réalisation, sera bien comprise et ses avantages apparaîtront mieux à la lecture de la description détaillée qui suit, donnée à titre indicatif et nullement limitatif, en référence aux dessins annexés dans lesquels :

La figure 1 est un schéma illustrant schématiquement le contexte d'utilisation du procédé de confirmation d'une exécution d'une commande de réduction de consommation de la puissance électrique d'au moins un véhicule de transport de passagers conforme à un mode de réalisation ;

La figure 2 illustre des étapes d'un procédé de confirmation d'une exécution d'une commande de réduction de consommation de la puissance électrique selon un mode de réalisation ;

La figure 3 illustre la boucle des étapes, depuis la transmission du signal de commande, jusqu'à la confirmation de l'exécution du signal de commande de réduction de consommation de la puissance électrique ; et

La figure 4 illustre un système de gestion apte à mettre en oeuvre le procédé selon l'invention.

Les éléments identiques représentés sur les figures précitées sont identifiés par des références numériques identiques.

L'invention trouve une application dans le domaine des véhicules de transport de passagers alimentés par un réseau électrique, en particulier dans les véhicules de transport ferroviaire, qu'ils soient dédiés à parcourir de longues distances ou de courtes distances, tel que des véhicules de transport ferroviaire urbains, comme par exemple des métros et tramways.

L'invention s'applique notamment à une flotte ou ensemble de véhicules de transport de passagers, chaque véhicule comportant au moins un système de climatisation.

En général, un véhicule de transport de passagers de type ferroviaire est équipé de plusieurs systèmes de climatisation. Par système de climatisation, on entend dans la suite du document, un système apte à refroidir ou à chauffer l'habitacle ou les habitacles d'un véhicule ferroviaire. Les conditions climatiques de chaque habitacle du véhicule de transport de passagers sont régulées par un système de climatisation. Par exemple, dans un véhicule ferroviaire, chaque voiture a un système de climatisation régulant ses propres conditions climatiques. Dans d'autres exemples, un même système de climatisation peut réguler les conditions climatiques de plusieurs véhicules.

Dans un souci de simplification, on considère dans ce texte que chaque véhicule de transport de passagers d'une flotte de véhicules comporte un système unique de climatisation. Néanmoins, comme indiqué ci-dessus, un véhicule peut comporter plusieurs systèmes de climatisation. Par exemple, un véhicule pourrait comporter autant de systèmes de climatisation que d'habitacles.

Par conséquent, dans ce qui suit, un système de climatisation d'un véhicule se réfère à un système de climatisation associé à au moins un habitacle du véhicule. En outre, la température d'un véhicule se réfère à la température d'au moins un habitacle du véhicule.

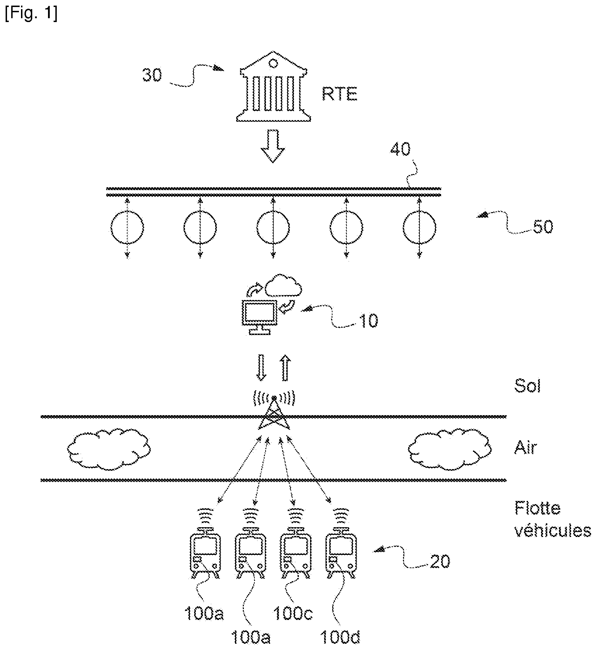

La figure 1 représente le contexte d'utilisation du procédé de confirmation d'une exécution d'une commande de réduction de consommation de la puissance électrique d'une flotte ou ensemble de véhicules de transport de passagers 20.

Dans le mode de réalisation illustré, le procédé de confirmation est mis en oeuvre sur un dispositif de gestion 10 de la consommation d'énergie placé au sol. Dans d'autres modes de réalisation, le dispositif de gestion 10 de la consommation d'énergie peut être embarqué dans un ou plusieurs véhicules de transport de passagers de la flotte de véhicules.

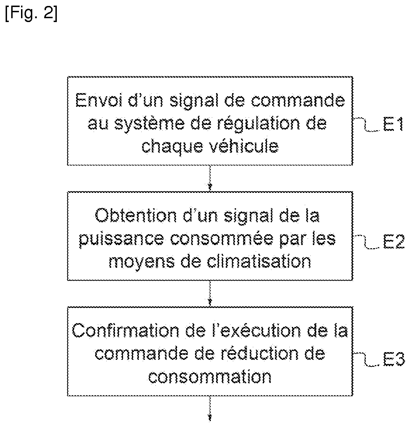

Le dispositif de gestion 10 de la consommation d'énergie comprend un ou des serveurs comprenant des moyens nécessaires pour la mise en oeuvre du procédé de confirmation d'une exécution d'une commande de réduction de consommation de la puissance électrique d'au moins un véhicule de transport de passagers qui sera décrit ci-dessous en référence à la figure 2.

Le dispositif de gestion 10 de la consommation d'énergie est apte à communiquer avec des serveurs de la compagnie gestionnaire 30 du réseau d'électricité 40 par le biais de moyens de communication, ainsi qu'avec les véhicules de transport de passagers de la flotte 20.

Dans certaines situations, par exemple lorsque la consommation d'énergie électrique de l'ensemble de consommateurs d'électricité 50 est supérieure aux prévisions pour un moment donné, la compagnie gestionnaire 30 du réseau d'électricité 40 émet une demande (ou des directives) de délestage ou d'effacement destinée aux consommateurs d'électricité 50.

En particulier, la compagnie gestionnaire 30 demande à chaque consommateur d'électricité 50 à ce que la consommation d'énergie soit réduite de sorte à présenter une valeur prédéfinie.

Le dispositif de gestion 10 de la consommation d'énergie recevant cette demande de la part de la compagnie gestionnaire 30, est configuré pour mettre en oeuvre un procédé de réduction de consommation de la puissance électrique pour implémenter, si possible, les directives d'effacement demandées.

Dans le cas d'une flotte de véhicules de transport de passagers, la compagnie gestionnaire 30 du réseau d'électricité 40 demande à la compagnie exploitant la flotte de véhicules 20 de réduire la consommation de la flotte à une valeur de consommation prédéfinie.

Dans un mode de réalisation, des dispositifs de contrôle locaux sont placés à bord des véhicules de transport de passagers. Ces dispositifs de contrôle locaux sont associés respectivement à des systèmes de climatisation (non représentés). Chaque dispositif de contrôle locale est configuré pour mesurer la consommation électrique du système de climatisation associé, et l'adresser au dispositif de gestion 10.

Dans un mode de réalisation, la réduction de consommation peut ne concerner qu'un véhicule, un sous-ensemble de véhicules ou l'ensemble des véhicules, selon la stratégie d'effacement établi par la compagnie exploitant la flotte. Ainsi la société exploitant les véhicules 20, peut choisir quels véhicules sont intégrés dans une stratégie d'effacement en réponse à des directives d'effacement émises par la société gestionnaire 30.

Ces dispositifs de contrôle locaux comportent des moyens classiques de mesure de la consommation d'énergie électrique et ne nécessitent pas d'être décrits ici.

Par exemple, la consommation d'énergie électrique est mesurée en surveillant les cycles d'activation des actionneurs (ou contacteurs) du système de climatisation. En effet, la puissance consommée par les actionneurs, tels que les résistances de chauffage, les ventilateurs ou les compresseurs étant connue, la consommation d'énergie électrique est connue en surveillant les cycles d'activation des actionneurs. A titre d'exemple nullement limitatif, une résistance de chauffage d'une puissance nominale de 10 kW avec un cycle d'activation de 30% consomme 3 kW en moyenne lissée.

Dans ce mode de réalisation, le dispositif de gestion 10 et les dispositifs de contrôle locaux forment un système de gestion de la consommation d'énergie électrique d'un ensemble de véhicules de transport de passagers 20. Un tel système de gestion de la consommation électrique est apte à recevoir un signal de commande du/des serveurs et d'augmenter ou de réduire la puissance consommée par les moyens de climatisations en réponse à cette commande.

La figure 2 illustre le procédé de confirmation d'une exécution d'une commande de réduction de consommation de la puissance électrique d'au moins un véhicule de transport de passagers.

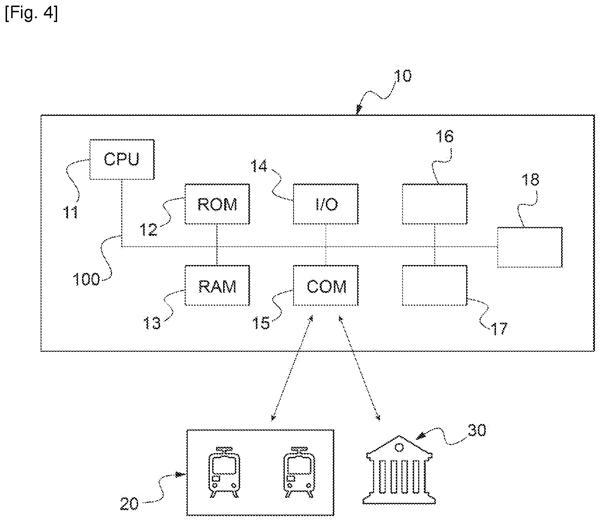

Le procédé est mis en oeuvre par le dispositif de gestion 10. Un mode de réalisation du dispositif de gestion 10 sera décrit en référence à la figure 4.

Lorsque le dispositif de gestion 10 reçoit une demande ou requête d'effacement de la part de la compagnie gestionnaire 30 du réseau électrique 40, un signal de commande prenant en compte ces directives d'effacement est émis à destination des véhicules de la flotte ferroviaire.

Comme expliqué précédemment, l'effacement vise à réduire la puissance consommée par le système de climatisation embarqué dans chacun des véhicules ferroviaires de la flotte. Chaque système de climatisation comprend des moyens de climatisation, un système de régulation de température et un capteur de température. Un système de régulation est associé à chacun des moyens de climatisation et est configuré pour maintenir la température d'un habitacle d'un des véhicules à une température de consigne en fonction d'une température mesurée dans l'habitacle par un capteur de température.

Pour réduire la puissance consommée par les moyens de climatisation, le dispositif de gestion 10 du système de gestion de la consommation électrique de la flotte de véhicules est apte à émettre une commande de réduction de consommation de la puissance électrique à destination d'au moins un des véhicules de transport de passagers.

Le principe de la réduction de la consommation des moyens de climatisation est de leurrer les capteurs embarqués dans les habitacles, afin de modifier la température mesurée de sorte à baisser la température présente dans les salles voyageurs en hiver ou l'augmenter en été.. Ainsi, la puissance consommée nécessaire pour atteindre la température de consigne se retrouve réduite, permettant donc de réduire la consommation des moyens de climatisation.

La réduction de la consommation des moyens de climatisation s'appuie sur l'envoi d'un signal pour leurrer le capteur embarqué dans le véhicule dont la consommation est réduite. Ce signal est donc une variation de température en fonction du temps. A chaque instant t, la valeur du signal est ajoutée à la température mesurée dans chacun des habitacles, de sorte à obtenir une réduction de consommation de la puissance électrique en accord avec les directives d'effacement.

Le signal de leurre est ici appelé le signal de commande de réduction de la consommation et est obtenu à partir du signal de pilotage de la variation de la puissance électrique consommée, résultant des directives d'effacement, et d'un signal dit de référence.

L'étape d'envoi E1 du procédé comme illustré à la figure 2 vise à envoyer un signal de commande de réduction de consommation au système de régulation de chaque véhicule, le signal de commande étant modulé par un signal de référence.

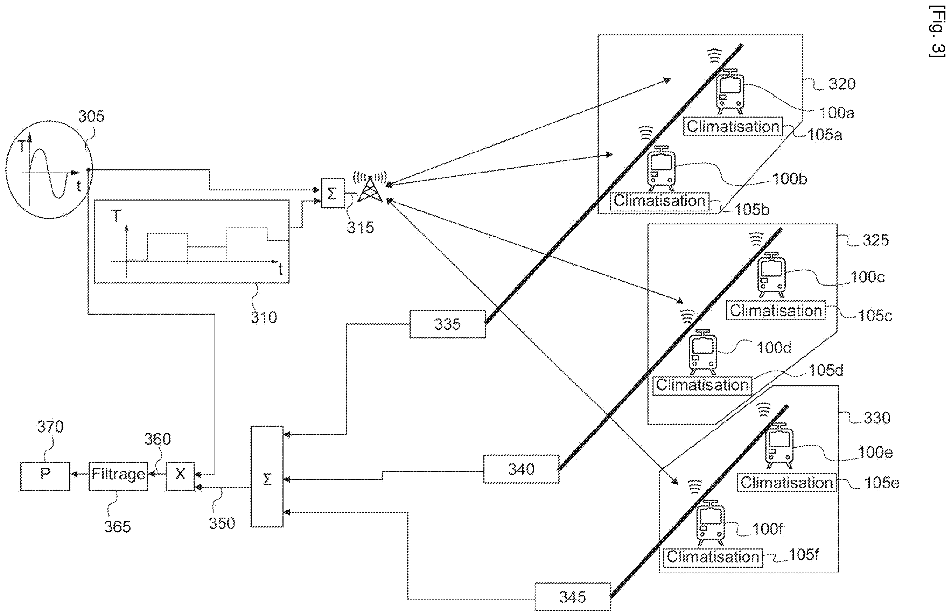

L'obtention du signal de commande de réduction de la consommation 315 est illustrée à la figure 3. Le signal de commande modulé est obtenu par modulation d'un signal de pilotage de la variation de la puissance électrique consommée 310 par un signal de référence 305.

Dans un premier temps, les directives d'effacement sont retranscrites en un signal pouvant être transmis et utilisé par la suite dans le système de gestion de la consommation électrique de la flotte de véhicules. Ainsi, à partir de la requête émise par la société gestionnaire 30 en effacement est obtenu le signal de pilotage de la variation de la puissance électrique consommée 310 : il s'agit d'une variation de température en fonction du temps, dont la valeur à chaque instant t, est utilisée pour leurrer les capteurs des véhicules intégrés dans la stratégie d'effacement. Ainsi, dans chacun des véhicules intégrés dans la stratégie d'effacement, la valeur du signal de commande à un instant t est ajoutée à la température mesurée au même instant t par le capteur de température.

Comme on peut le voir, la température du signal de pilotage de la variation de la puissance électrique consommée 310 peut varier sur de courtes périodes, de l'ordre de 30 minutes. Bien que non illustré sur le présent exemple, la température peut être négative, notamment lorsque les moyens de climatisations 105a, 105b, 105c, 105d, 105e et 105f sont configurés pour refroidir.

Ce signal de pilotage de la variation de la puissance électrique consommée 310 est ensuite modulé avec un signal de référence 305. Par modulation, on entend ici une transformation du signal de pilotage de la variation de la puissance électrique consommée 310 de sa forme initiale en créneau non périodique en une forme adaptée pour sa transmission, puis pour l'identification de sa signature dans la puissance totale consommée par la flotte de véhicules. Ici la transformation est la somme du signal de pilotage de la variation de la puissance électrique consommée 310 avec le signal de référence 305.

Le signal de référence 305 est un signal qui est utilisé notamment pour introduire, dans le signal de commande, une signature, c'est-à-dire une forme ou une marque spécifique, pouvant être retrouvée dans le signal de puissance consommé par l'ensemble des véhicules.

Le signal de référence 305 est ici à titre d'exemple un signal sinusoïdal, dont les caractéristiques, la période et l'amplitude, sont choisies de la manière suivante :

- Amplitude : elle doit être suffisamment faible. En effet, le signal de référence 305 étant ajouté au signal de pilotage de la variation de la puissance électrique consommée, il est nécessaire que l'amplitude du signal de référence, qui est une température, soit la plus faible possible de sorte que l'amplitude n'ait aucune conséquence sur le confort des passagers. Elle doit également être suffisamment élevée pour que le signal de référence soit compatible avec la résolution du système, c'est-à-dire mesurable et identifiable par le système de gestion de la consommation électrique de la flotte de véhicules. Le signal de référence 305 est choisi avec une amplitude comprise entre [0°C ; 1°C], de préférence entre [0,2°C ; 0,5°C], et égal de préférence à 0,2°C.

- Période : la période doit être dimensionnée de sorte à être supérieure au temps de réactivité des moyens de climatisation 105a, 105b, 105c, 105d, 105e et 105f. En outre, la fréquence associée à cette période ne doit pas exister au préalable dans le système. Par exemple, l'alternance jour/nuit est une fréquence très visible dans le spectre de puissance consommée, la période choisie doit donc s'en distinguer. En outre, la fréquence doit être suffisamment élevée de sorte que le temps d'intégration pour la démodulation de la puissance consommée par les véhicules au niveau du serveur ne soit pas trop élevé. Une période de l'ordre de 2500 s permet de remplir les critères tels qu'énoncés ci-dessus. En particulier, la valeur de 2504s a été retenue lors des tests.

Le signal de commande de réduction de consommation 315 est alors obtenu. Il est transmis aux véhicules intégrés à la stratégie d'effacement par des moyens de transmission sans fil par exemple. Comme illustré à la figure 3, le signal de commande de réduction de consommation est envoyé à l'ensemble des véhicules de la flotte.

L'étape d'obtention E2 de la figure 2 vise à obtenir un signal de la puissance consommée par les moyens de climatisation 105a, 105b, 105c, 105d, 105e et 105f de l'ensemble des véhicules en réponse au signal de référence 305.

Pour cela, dans un premier temps, le signal de la puissance électrique totale consommée par l'ensemble des véhicules en réponse au signal de commande est déterminé.

La flotte de véhicule peut être organisée en sous-ensembles 320, 325 et 330, pour lesquels sont déterminés des signaux de puissances électriques consommées 335, 340 et 345 pour les sous-ensembles 320, 325 et 330 de véhicules en réponse au signal de commande 315. Le signal de puissance électrique totale consommée 350 par l'ensemble des véhicules est obtenu en sommant l'ensemble des puissances consommées 335, 340 et 345 des sous-ensembles 320, 325 et 330.

Une fois le signal de la puissance électrique totale consommée 350 par l'ensemble des véhicules en réponse au signal de commande 315 est obtenue, celui-ci est démodulé.

La démodulation du signal de puissance électrique totale 350 consommée par l'ensemble des véhicules est réalisée en multipliant le signal avec le signal de référence 305. Un signal intermédiaire 360 est alors obtenu.

L'étape de confirmation E3 de la figure 2 du procédé vise à confirmer de l'exécution de la commande de réduction de consommation en fonction des caractéristiques dudit signal de la puissance consommée par les moyens de climatisation de l'ensemble des véhicules.

Pour cela, le signal intermédiaire 360 est filtré, et le résultat en sortie du filtre est comparé à un seuil, pour confirmer ou non la réception du signal de commande.

En effet, lorsque le signal de commande reçu par les moyens de climatisation 105a, 105b, 105c, 105d, 105e et 105f des véhicules 100a, 100b, 100c, 100d, 100e et 100f est modulé avec le signal de référence 305 de la forme suivante :

[Math.1]

$$ref\_signal = 2\ sin(\alpha)$$

la puissance électrique consommée par les moyens de climatisation 105a, 105b, 105c, 105d, 105e et 105f, en réponse au signal de commande sera alors de la forme suivante :

[Math.2]

$$puissance_{clim} = A\ sin\ \alpha$$

Ainsi, la puissance électrique totale consommée 350 par l'ensemble des véhicules 100a, 100b, 100c, 100d, 100e et 100f comprend une composante égale à l'expression de $puissance_{clim}$.

La puissance électrique totale consommée 350 par l'ensemble des véhicules 100a, 100b, 100c, 100d, 100e et 100f peut s'exprimer comme la somme de la puissance consommée par les moyens de climatisation, $puissance_{clim}$, de l'ensemble des véhicules 100a, 100b, 100c, 100d, 100e et 100f, et de la puissance, $puissance_{autres}$, consommée par les autres systèmes des véhicules 100a, 100b, 100c, 100d, 100e et 100f (par exemple la traction, les équipements embarqués autres, etc...).

La puissance électrique totale consommée par l'ensemble des véhicules 100a, 100b, 100c, 100d, 100e et 100f, multipliée par le signal de référence 305 est alors égale à un signal intermédiaire 360 qui est alors de la forme suivante :

[Math.3]

$$puissance_{totale} \times ref_{signal}$$
$$= puissance_{clim} \times ref_{signal} + puissance_{autres} \times ref_{signal}$$
$$= 2A \sin^2 \alpha + puissance_{autres} \times ref_{signal}$$
$$= A + A \cos 2\alpha + puissance_{autres} \times ref_{signal}$$

avec $2 \sin^2 \alpha = \frac{1-\cos(2a)}{2}$

Le signal intermédiaire 360 est alors filtré, de sorte qu'en sortie de filtre, les composantes hautes fréquences sont éliminées. Il peut s'agir, par exemple, d'un filtrage 365 à l'aide d'un filtre passe bas. Dans le cas où la commande reçue par les moyens de climatisation est bien modulée par le signal de référence 305, les composantes hautes fréquences, s'exprimant $composantes_{hautes\ fréquences}$ = A cos 2$\alpha$ + $puissance_{autres} \times ref_{signal,}$ sont retirées du signal, de sorte qu'est obtenu en sortie un signal continu égal à A, qui est la puissance consommée 370 par les moyens de climatisation 105a, 105b, 105c, 105d, 105e et 105f en réponse au signal de référence 305.

Lorsque le signal de commande reçu par les moyens de climatisation ne comprend pas le signal de référence, par modulation, en sortie du filtre passe bas, le signal est nul ou égal au bruit du système. En effet, on ne retrouve pas la composante égale à $A sin\alpha$ représentant la puissance consommée par les moyens de climatisation en réponse au signal de commande modulé par le signal de référence. Sans cette composante, il n'est pas possible d'obtenir une composante continue en sortie du filtre.

La confirmation dépend du résultat de la comparaison de la puissance consommée 370 par les moyens de climatisation 105a, 105b, 105c, 105d, 105e et 105f en réponse au signal de référence 305 à un seuil prédéterminé.

Ainsi, on peut choisir un seuil représentant le niveau de bruit en sortie du système. Il est également possible, en calculant en amont, la valeur moyenne de la puissance consommée en réponse au signal de commande, d'utiliser cette valeur (ou des valeurs voisines) comme seuil. Cela permet d'avoir un niveau de confirmation fiable. Ainsi, l'obtention d'un signal continu égal à la puissance consommée 370 par les moyens de climatisation 105a, 105b, 105c, 105d, 105e et 105f en réponse au signal de référence 305, supérieur à un seuil prédéterminé, permet de confirmer que le signal de commande 315, c'est-à-dire le signal de pilotage de la variation de puissance électrique 310 modulé par le signal de référence 305, a bien été reçu et exécuté par les moyens de climatisation, dès lors que la forme du signal de la puissance consommée est telle qu'attendue, c'est-à-dire comprenant une composante de la forme $puissance_{clim}$ = A $sin\alpha$.

Pour s'assurer d'avoir une confirmation la plus précise possible, il est nécessaire d'avoir une période d'intégration assez longue.

Dans l'exemple, ici présenté, avec un signal de référence 305 avec une période égale 2504s, sur un exemple représentatif du signal de la puissance consommée par une flotte de 1000 trains comprenant chacun 4 voitures, une période d'intégration d'un jour permet d'avoir un résultat avec une précision de 10%, alors qu'une période d'intégration de 10 jours permet d'avoir une précision de 1%.

Pour cela, le signal de référence 305 est envoyé en permanence aux moyens de climatisations, bien que le signal de pilotage de la variation de puissance électrique 310 est nul, c'est-à-dire qu'aucune directive d'effacement n'est émise par la société gestionnaire 30.

Comme évoqué précédemment, le signal de référence 305 a une amplitude qui est peu élevée, égale à 0, 2°C dans l'exemple, de sorte que, bien qu'utilisé comme leurre du capteur, cette variation n'influe pas le confort des passagers.

Dans l'exemple, les sous-ensembles 320, 325, 330 de véhicules 100a, 100b, 100c, 100d, 100e et 100 peuvent être constitués selon leur positionnement géographique et les conditions climatiques en ces positions géographiques. En effet, selon que le temps est doux, ou non, et donc que les moyens de climatisations sont activés ou non, la réduction de consommation peut être plus ou moins importante. En effet, lorsque le temps est nul, les moyens de climatisation sont peu, voire pas utilisés, donc la réduction de consommation en réponse à des directives d'effacement est limitée. On peut dire que le potentiel d'effacement est faible. Il peut s'évaluer en fonction de la puissance consommée, avant l'exécution de directives d'effacement, en se basant sur la durée de l'activation des contacteurs (ou actionneurs) des moyens de climatisation.

Selon le potentiel d'effacement, des sous-ensembles peuvent ainsi donc être créés, et un signal de pilotage de la variation de puissance électrique 310 peut être déterminé pour chaque sous-groupe en prenant en considération ce potentiel d'effacement.

La figure 4 représente schématiquement un exemple de dispositif de gestion 10 de la consommation d'énergie électrique apte à mettre en oeuvre le procédé de confirmation de la bonne exécution d'une commande de réduction de consommation selon l'invention.

Le dispositif de gestion 10 de la consommation d'énergie électrique est par exemple un ou plusieurs serveurs incorporant les moyens nécessaires pour mettre en oeuvre le procédé de confirmation de la bonne exécution d'une commande de réduction de consommation d'une flotte de véhicules 20 conforme à l'invention.

Le dispositif de gestion 10 comprend un bus de communication 100 auquel sont reliées :

- une unité de traitement 11, nommée sur la figure CPU (pour « Central Processing Unit ») et pouvant comporter un ou plusieurs processeurs ;
- une mémoire non volatile 12, par exemple ROM (pour « Read Only Memory »), EEPROM (pour « Electrically Erasable Read Only Memory ») ou une mémoire Flash ;
- une mémoire vive 13 ou RAM (pour « Random Access Memory ») ;
- une interface 14 d'entrée/sortie, nommée sur la figure I/O (pour « Input/Output »), par exemple un écran, un clavier, une souris ou un autre dispositif de pointage tel qu'un écran tactile ou une télécommande permettant à un utilisateur d'interagir avec le dispositif de gestion via une interface graphique ; et
- une interface de communication ou moyens de communication 15, nommée COM sur la figure, adaptée à communiquer, via un réseau, avec des serveurs de la compagnie gestionnaire 30 du réseau électrique 40 et avec les véhicules de transport de passagers de la flotte 20.

Selon un mode de réalisation, les moyens de communication 15 du dispositif de gestion 10 comportent des moyens de réception de données provenant de la compagnie gestionnaire 30 du réseau électrique 40 et des véhicules de transport de passagers. Ces données peuvent être par exemple des informations de consommation représentatives de l'énergie électrique consommée par les véhicules de l'ensemble, des requêtes ou directives d'effacement provenant de la compagnie gestionnaire 30 du réseau électrique 40, ou des informations relatives à la température d'au moins un habitacle du véhicule.

En outre, les moyens de communication 15 du dispositif de gestion 10 comportent des moyens de transmission pour envoyer une commande de réduction de la consommation de la puissance à au moins un véhicule de transport de passagers ou à l'ensemble des véhicules de la flotte.

La mémoire vive 13 comprend des registres adaptés à l'enregistrement des variables et paramètres créés et modifiés au cours de l'exécution d'un programme informatique comprenant des instructions pour la mise en oeuvre d'un procédé de confirmation selon l'invention. Les codes d'instructions du programme stocké en mémoire non-volatile 12 sont chargés en mémoire RAM 13 en vue d'être exécutés par l'unité de traitement CPU 11.

La mémoire non-volatile 12 est par exemple une mémoire réinscriptible de type EEPROM ou mémoire Flash pouvant constituer un support au sens de l'invention, c'est-à-dire pouvant comprendre un programme informatique comprenant des instructions pour la mise en oeuvre du procédé de confirmation.

Le dispositif de gestion de la consommation d'énergie électrique 10 comporte en outre des moyens de détermination configurés pour déterminer une puissance électrique consommée totale consommée par l'ensemble des véhicule en réponse à un signal de commande (en d'autres termes une consommation globale à un instant donné), à partir de l'ensemble d'informations de consommation reçu, et des moyens de génération configurés pour générer un ensemble de commandes destinées respectivement à un sous-ensemble de véhicules sélectionnés parmi les véhicules de l'ensemble 20, cela en réponse ou non de directives d'effacement.

Selon un mode de réalisation, les moyens de génération sont configurés pour générer des commandes en fonction du groupe de véhicules auquel les commandes sont destinées. Par exemple, en fonction de la position géographique des véhicules, en particulier si les conditions climatiques sont soit douces, pour lesquels la consommation des moyens de climatisations est faible, soit très froides ou très chaudes, pour lesquels la consommation des moyens de climatisations sont élevées, les commandes peuvent être différentes, le potentiel de réduction de la consommation étant différent dans ces deux situations. Egalement, lorsqu'aucune directives d'effacement n'est émise par la société gestionnaire 30, les moyens de génération peuvent être configurés pour continuer à générer une commande égale au signal de référence.

Le dispositif de gestion 10 comporte en outre des moyens de génération d'un signal de pilotage de la variation de la puissance électrique consommée (signal d'effacement) en fonction des directives d'effacement reçues de la société gestionnaire. La société gestionnaire transmet des directives d'effacement, sous la forme de pourcentage de réduction par exemple, ou d'une puissance cible de consommation à atteindre par la flotte de véhicule. Les moyens de génération sont ainsi configurés pour retranscrire des directives d'effacement de la société gestionnaire en un signal exploitable par le système de gestion de la consommation d'énergie électrique.

Le dispositif de gestion 10 comporte également des moyens de modulation 16 et de démodulation 17 d'un signal. Comme expliqué précédemment, ces moyens de modulation 16 sont aptes à effectuer une modulation du signal de pilotage de la variation de la puissance électrique consommée à l'aide du signal de référence. Ces moyens de modulation 16 peuvent être par exemple un additionneur configuré pour sommer le signal de référence avec le signal de pilotage de la variation de la puissance électrique consommée. Les moyens de démodulation 17 sont aptes à effectuer une démodulation du signal de puissance consommée par l'ensemble des véhicules de la flotte. Ces moyens de démodulation 17 peuvent par exemple un multiplieur qui multiplie par le signal de référence le signal de puissance électrique totale consommée par l'ensemble des véhicules.

En outre, le dispositif de gestion 10 comporte des moyens de filtrage 18, aptes à filtrer le signal intermédiaire, de sorte à en retirer les composantes hautes fréquences. Il s'agit par exemple d'un filtre passe bas, dont la fréquence de coupure est dimensionnée pour atténuer les composantes hautes fréquences du signal intermédiaire.

Ainsi, grâce aux moyens décrits ci-dessus, le dispositif de gestion 10 peut mettre en oeuvre le procédé de gestion de la consommation d'énergie électrique. En mettant en oeuvre ce procédé, le système de climatisation de la totalité des véhicules d'une flotte est commandé en tenant compte de l'état ou la situation de service des véhicules, de manière à diminuer en temps réel la consommation électrique globale de la flotte en réponse à une requête d'effacement provenant de la compagnie gestionnaire du réseau électrique.

## Revendications

1. Procédé de confirmation d'une exécution d'une commande de réduction de consommation de la puissance électrique (315) d'au moins un véhicule de transport de passagers (100a, 100b, 100c, 100d, 100e,100f), chaque véhicule (100a, 100b, 100c, 100d, 100e,100f) comprenant un système de régulation de température et un capteur de température, le système de régulation étant associé à des moyens de climatisation (105a, 105b, 105c, 105d, 105e,105f) et étant configuré pour maintenir la température d'un habitacle dudit véhicule (100a, 100b, 100c, 100d, 100e,100f) à une température de consigne en fonction d'une température mesurée dans l'habitacle par le capteur de température, le procédé étant **caractérisé en ce qu'**il comprend les étapes suivantes :

   - envoi (E1) d'un signal de commande de réduction de consommation (315) au système de régulation de chaque véhicule (100a, 100b, 100c, 100d, 100e,100f), le signal de commande (315) étant modulé par un signal de référence (305);
   - obtention (E2) d'un signal de la puissance consommée par les moyens de climatisation (105a, 105b, 105c, 105d, 105e,105f) de l'ensemble des véhicules (100a, 100b, 100c, 100d, 100e,100f) en réponse au signal de référence (305) ; et
   - confirmation (E3) de l'exécution de la commande de réduction de consommation (315) en fonction des caractéristiques dudit signal de la puissance consommée par les moyens de climatisation (105a, 105b, 105c, 105d, 105e,105f) de l'ensemble des véhicules(100a, 100b, 100c, 100d, 100e,100f).

2. Procédé selon la revendication 1, dans lequel l'étape d'obtention (E2) du signal de la puissance consommée par les moyens de climatisation (105a, 105b, 105c, 105d, 105e,105f) en réponse au signal de référence (305) comprend les étapes suivantes :

   - détermination d'un signal d'une puissance électrique totale (350) consommée par l'ensemble des véhicules (100a, 100b, 100c, 100d, 100e,100f) en réponse au signal de commande ; et
   - démodulation du signal de puissance électrique totale consommée (350) par l'ensemble des véhicules.

3. Procédé selon l'une des revendications 1 ou 2, dans lequel l'étape d'envoi (E1) comprend une étape dans laquelle une valeur du signal de commande (315) à un instant t est ajoutée à la température mesurée au même instant t par le capteur de température.

4. Procédé selon l'une des revendications 1 à 3, dans lequel le signal de commande modulé (315) est la somme d'un signal de pilotage de la variation de la puissance électrique consommée (310) et du signal de référence (305).

5. Procédé selon l'une des revendications 1 à 4, dans lequel l'étape d'obtention (E2) comprend les étapes suivantes :

   - obtention d'un signal intermédiaire (360) en multipliant par le signal de référence (305), le signal de puissance électrique totale consommée (350)par l'ensemble des véhicules (100a, 100b, 100c, 100d, 100e,100f) ; et
   - filtrage (365) du signal intermédiaire (360).

6. Procédé selon la revendication 5, dans lequel la réception du signal de commande (315) est confirmée si le signal intermédiaire filtré (370) a une amplitude supérieure à un seuil prédéterminé.

**7.** Procédé selon l'une des revendications 5 ou 6, dans lequel le filtrage (365) est réalisé par un filtre passe-bas.

**8.** Procédé selon l'une des revendications 2 à 7, dans lequel l'étape de détermination comprend les étapes suivantes :

- détermination des signaux de puissances électriques consommées (335, 340, 345) pour des sous-ensembles (320, 325, 330) de véhicules en réponse au signal de commande (305) ; et
- déduction du signal de puissance électrique totale consommée (650) par l'ensemble des véhicules par la somme des signaux de puissances électrique 335, 340, 345) des sous-ensembles (320, 325, 330).

**9.** Procédé selon l'une des revendications 1 à 8, dans lequel le signal de référence (305) est un signal sinusoïdal.

**10.** Procédé selon la revendication 9, le signal de référence (305) a une période de l'ordre 2504s.

**11.** Procédé selon l'une des revendications 9 ou 10, dans lequel le signal de référence (305) a une amplitude comprise entre [0°C ; 1°C], de préférence entre [0,2°C ; 0,5°C], et de préférence égal à 0,2°C.

**12.** Dispositif de gestion (10) de la consommation d'énergie électrique comprenant des moyens de confirmation d'une exécution d'une commande de réduction de consommation de la puissance électrique configurés pour mettre en oeuvre le procédé selon l'une des revendications 1 à 11.

**Patentansprüche**

**1.** Verfahren zur Bestätigung einer Ausführung eines Befehls der Verringerung des Verbrauchs der elektrischen Leistung (315) von mindestens einem Fahrzeug zur Beförderung von Personen (100a, 100b, 100c, 100d, 100e, 100f), wobei jedes Fahrzeug (100a, 100b, 100c, 100d, 100e, 100f) ein System zur Temperaturregelung und einen Temperatursensor umfasst, wobei das Regelungssystem Klimatisierungsmitteln (105a, 105b, 105c, 105d, 105e, 105f) zugeordnet ist und konfiguriert ist, um die Temperatur eines Fahrgastraums des Fahrzeugs (100a, 100b, 100c, 100d, 100e, 100f) aufrechtzuerhalten bei einer Solltemperatur in Abhängigkeit von einer vom Temperatursensor im Fahrgastraum gemessenen Temperatur, wobei das Verfahren **dadurch gekennzeichnet ist, dass** es die folgende Schritte umfasst:

- Senden (E1) eines Befehlssignals der Verringerung des Verbrauchs (315) an das Regelungssystem jedes Fahrzeugs (100a, 100b, 100c, 100d, 100e, 100f), wobei das Befehlssignal (315) durch ein Referenzsignal (305) moduliert wird;
- Erhalten (E2) eines Signals der Leistung, die von den Klimatisierungsmitteln (105a, 105b, 105c, 105d, 105e, 105f) der Gesamtmenge der Fahrzeuge (100a, 100b, 100c, 100d, 100e, 100f) verbraucht wird, als Reaktion auf das Referenzsignal (305); und
- Bestätigung (E3) der Ausführung des Befehls der Verringerung des Verbrauchs (315) in Abhängigkeit von den Eigenschaften des Signals der Leistung, die von den Klimatisierungsmitteln (105a, 105b, 105c, 105d, 105e, 105f) der Gesamtmenge der Fahrzeuge (100a, 100b, 100c, 100d, 100e, 100f) verbraucht wird.

**2.** Verfahren nach Anspruch 1, wobei der Schritt des Erhaltens (E2) des Signals der Leistung, die von den Klimatisierungsmitteln (105a, 105b, 105c, 105d, 105e, 105f) verbraucht wird, als Reaktion auf das Referenzsignal (305), die folgenden Schritte umfasst:

- Bestimmen eines Signals einer elektrischen Gesamtleistung (350), die von der Gesamtmenge der Fahrzeuge (100a, 100b, 100c, 100d, 100e, 100f) verbraucht wird, als Reaktion auf das Befehlssignal; und
- Demodulation des Signals der elektrischen Gesamtleistung (350), die von der Gesamtmenge der Fahrzeuge verbraucht wird.

**3.** Verfahren nach einem der Ansprüche 1 oder 2, wobei der Sendeschritt (E1) einen Schritt umfasst, wobei ein Wert des Befehlssignal (315) zu einem Zeitpunkt t zur Temperatur addiert wird, die vom Temperatursensor zum gleichen Zeitpunkt t gemessen wird.

**4.** Verfahren nach einem der Ansprüche 1 bis 3, wobei das modulierte Befehlssignal (315) die Summe eines Signals der Steuerung der Veränderung der verbrauchten elektrischen Leistung (310) und des Referenzsignals (305) ist.

**5.** Verfahren nach einem der Ansprüche 1 bis 4, wobei der Erhaltungsschritt (E2) die folgenden Schritte umfasst:

- Erhalten eines Zwischensignals (360) durch Multiplikation des Referenzsignals (305) mit dem Signal der elektrischen Gesamtleistung (350), die von der Gesamtmenge der Fahrzeuge (100a, 100b, 100c, 100d, 100e, 100f) verbraucht wird; und
- Filtern (365) des Zwischensignals (360).

**6.** Verfahren nach Anspruch 5, wobei der Empfang des Befehlssignal (315) bestätigt wird, wenn das gefilterte Zwischensignal (370) eine Amplitude hat, die größer als ein vorbestimmter Schwellenwert ist.

**7.** Verfahren nach einem der Ansprüche 5 oder 6, wobei das Filtern (365) durch einen Tiefpassfilter erfolgt.

**8.** Verfahren nach einem der Ansprüche 2 bis 7, wobei der Bestimmungsschritt die folgenden Schritte umfasst:

- Bestimmen der Signale der elektrischen Leistungen (335, 340, 345), die von Untermengen (320, 325, 330) von Fahrzeugen verbraucht werden, als Reaktion auf das Befehlssignal (305); und
- Deduktion des Signals der elektrischen Gesamtleistung (650), die von der Gesamtmenge der Fahrzeuge verbraucht wird, von der Summe der Signale der elektrischen Leistungen (335, 340, 345) der Untermengen (320, 325, 330).

**9.** Verfahren nach einem der Ansprüche 1 bis 8, wobei das Referenzsignal (305) ein sinusförmiges Signal ist.

**10.** Verfahren nach Anspruch 9, wobei das Referenzsignal (305) eine Periode von etwa 2504 s aufweist.

**11.** Verfahren nach einem der Ansprüche 9 oder 10, wobei das Referenzsignal (305) eine Amplitude zwischen [0 °C; 1 °C] aufweist, vorzugsweise zwischen [0,2 °C; 0,5 °C] und vorzugsweise gleich 0,2 °C.

**12.** Vorrichtung zur Verwaltung (10) des Verbrauchs elektrischer Energie, Mittel zur Bestätigung einer Ausführung eines Befehls der Verringerung des Verbrauchs der elektrischen Leistung umfassend, die konfiguriert sind, um das Verfahren nach einem der Ansprüche 1 bis 11 durchzuführen.

**Claims**

**1.** Method for confirming execution of a command to reduce consumption of the electrical power (315) of at least one passenger transport vehicle (100a, 100b, 100c, 100d, 100e, 100f), each vehicle (100a, 100b, 100c, 100d, 100e, 100f) comprising a temperature control system and a temperature sensor, the control system being associated with air conditioning means (105a, 105b, 105c, 105d, 105e, 105f) and being configured to keep the temperature of a passenger compartment of said vehicle (100a, 100b, 100c, 100d, 100e 100f) at a setpoint temperature as a function of a temperature measured in the passenger compartment by the temperature sensor, the method being **characterized in that** it comprises the following steps:

- sending (E1) a control signal to reduce consumption (315) to the control system of each vehicle (100a, 100b, 100c, 100d, 100e 100f), the control signal (315) being modulated by a reference signal (305);
- obtaining (E2) a signal of the power consumed by the air conditioning means (105a, 105b, 105c, 105d, 105e, 105f) of all the vehicles (100a, 100b, 100c, 100d, 100e, 100f) in response to the reference signal (305); and
- confirming (E3) execution of the command to reduce consumption (315) as a function of the characteristics of said signal of the power consumed by the air conditioning means (105a, 105b, 105c, 105d, 105e, 105f) of all the vehicles (100a, 100b, 100c, 100d, 100e, 100f).

**2.** Method according to claim 1, wherein the step of obtaining (E2) the signal of the power consumed by the air conditioning means (105a, 105b, 105c, 105d, 105e, 105f) in response to the reference signal (305) comprises the following steps:

- determining a signal of a total electrical power (350) consumed by all the vehicles (100a, 100b, 100c, 100d, 100e, 100f) in response to the control signal; and
- demodulating the signal of the total electrical power consumed (350) by all the vehicles.

3. Method according to one of claims 1 or 2, wherein the step of sending (E1) comprises a step in which a value of the control signal (315) at a moment t is added to the temperature measured at the same moment t by the temperature sensor.

4. Method according to one of claims 1 to 3, wherein the modulated control signal (315) is the sum of a signal for controlling the variation in the electrical power consumed (310) and the reference signal (305).

5. Method according to one of claims 1 to 4, wherein the step of obtaining (E2) comprises the following steps:

   - obtaining an intermediate signal (360) by multiplying the signal of the total electrical power consumed (350) by all the vehicles (100a, 100b, 100c, 100d, 100e, 100f) by the reference signal (305); and
   - filtering (365) the intermediate signal (360).

6. Method according to claim 5, wherein the reception of the control signal (315) is confirmed if the filtered intermediate signal (370) has an amplitude greater than a predetermined threshold.

7. Method according to one of claims 5 or 6, wherein the filtering (365) is carried out by a low-pass filter.

8. Method according to one of claims 2 to 7, wherein the step of determining comprises the following steps:

   - determining the signals of electrical power consumed (335, 340, 345) for subsets (320, 325, 330) of vehicles in response to the control signal (305); and
   - deduction of the signal of the total electrical power consumed (650) by all the vehicles from the sum of the signals of the electrical power (335, 340, 345) of the subsets (320, 325, 330).

9. Method according to one of claims 1 to 8, wherein the reference signal (305) is a sinusoidal signal.

10. Method according to claim 9, wherein the reference signal (305) has a period of around 2504s.

11. Method according to one of claims 9 or 10, wherein the reference signal (305) has an amplitude comprised between [0°C; 1°C], preferably between [0.2°C; 0.5°C], and preferably equal to 0.2°C.

12. Device (10) for managing the electrical energy consumption comprising means for confirming execution of a command to reduce consumption of the electrical power configured to carry out the method according to one of claims 1 to 11.

[Fig. 1]

[Fig. 2]

| Envoi d'un signal de commande au système de régulation de chaque véhicule |
|---|

E1

↓

| Obtention d'un signal de la puissance consommée par les moyens de climatisation |
|---|

E2

↓

| Confirmation de l'exécution de la commande de réduction de consommation |
|---|

E3

[Fig. 3]

EP 4 048 547 B1

[Fig. 4]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3011912

- EP 3037317 A1